# EUROPEAN PATENT SPECIFICATION

(11) **EP 0 474 633 B1**
(45) Date of publication and mention of the grant of the patent: **20.12.1995**
(21) Application number: 90902316.0
(22) Date of filing: 09.01.1990
(51) Int. Cl.: F02K 3/075, F02K 7/16

(54) **CONTROLLING THE FLOW RATIO IN A MULTIFLOW JET ENGINE**
REGELUNG DER DURCHSTRÖMUNGSRATE BEI EINEM MEHRSTROMTRIEBWERK
COOMANDE DU RAPPORT D'ECOULEMENT DANS UN MOTEUR A REACTION MULTIFLUX

(30) Priority: 10.01.1989 GB 8900530
(43) Date of publication of application: 18.03.1992
(73) Proprietor: CRAIG, Alfred Cowie, London N8 8RS (GB)
(72) Inventor: CRAIG, Alfred Cowie, London N8 8RS (GB)
(74) Representative: Howden, Christopher Andrew
(86) International application number: GB9000028
(87) International publication number: WO9008255

(56) References cited:
- DE-C- 1 131 467
- FR-A- 1 086 315
- FR-A- 1 586 188
- FR-A- 2 508 551
- GB-A- 861 101
- US-A- 3 161 018
- US-A- 3 432 100

## Description

THIS INVENTION relates to jet powered aircraft.

It is an object of this invention to improve the propulsive effectiveness of a jet propelled aircraft in flight in respect of its jet engine thrust.

DE-B-1131467 discloses a combined ramjet and turbojet engine in which the turbojet is arranged concentrically within an outer casing and the air-flow passage and combustion chamber of the ramjet are provided by the space defined between the turbojet and the casing. A forwardly tapering nacelle extends forwards from the turbojet, the outer casing converges towards its front end, and an annular slide, converging towards its front end is mounted on the turbojet within the outer casing for fore and aft sliding movement between a forward position, in which the air intake to the turbojet is open and the air intake to the turbojet is open and the air intake to the turbojet is closed by engagement of the exterior of the slide with the interior of the forward end of the outer casing, and a rearward position in which the narrower forward end of the slide engages the surface of the nacelle, to close off the air intake to the turbojet and open the air intake to the ramjet.

US-A-3161018 discloses a combined ramjet and turbojet engine in which a turbojet is disposed coaxially within an outer cowling and a ramjet chamber is formed between said cowling and the turbojet. A passage is provided between the downstream side of a low-pressure compressor of the turbojet and the ramjet space and adjustable flaps or slides allow the size of the bypass passage to be varied.

FR-A-1586188 discloses a similar arrangement in which, however, the size of a passage from the downstream end of a low pressure compressor to a concentric passage around the turbojet is fixed whilst an annular slide allows the main inlet to the concentric passage to be opened or closed, whilst one-way flap valves are provided between the downstream side of the turbojet turbines and a combustion chamber formed in the concentric passage.

These prior arrangements do not, however, offer any progressive control of propulsive efficiency.

More particularly, it is an object of the invention to provide a jet propelled aircraft including adjustment means whereby more effective adjustment of operating characteristics can be made to maximise propulsive effectiveness in various different conditions, for example different aircraft air speeds or attitudes.

According to the present invention, there is provided an aircraft comprising an airframe structure, at least one jet engine having a longitudinal axis, said jet engine having a surrounding engine casing defining at opposite ends of said casing an inlet opening and an exhaust outlet centred on said engine axis, a further hollow casing enclosing said engine casing coaxial with the engine and spaced from the engine casing to define therewith an annular-section duct, said further casing having an inlet opening centred on said axis and disposed upstream of said inlet opening of the engine casing, an outlet opening centred on said axis and disposed downstream of said exhaust outlet of said engine casing, said further hollow casing having a first internal diameter at a first position upstream of said engine casing, a second internal diameter at a position downstream of the inlet opening of said engine casing and a region between said first and second positions over which the internal diameter increases from said first position to the second position, an annular inlet opening to said annular-section duct, said annular inlet opening being defined by the leading end of said engine casing and said region of the outer casing between said first and second positions, characterised by the absence of any duct or other opening for air or combustion gas flow through said engine casing between the interior of said jet engine and said annular section duct, the region between said inlet opening and said exhaust outlet of the engine and further characterised by at least one engine support member extending from said engine to said airframe structure to support the engine, means mounting said further casing for longitudinal movement relative to said jet engine and said engine casing and said engine support member, and first actuator means for effecting such longitudinal movement whereby said annular inlet opening to said annular-section duct can be varied in size whereby, in use, the quantity of air by-passing the jet engine *via* said annular-section duct can be varied.

It has been found that an analogous arrangement also has advantages in relation to marine or aquatic propulsion systems in which vessels are driven, in effect, by imparting velocity to water drawn from the water surrounding a vessel, rather than to air drawn from the surrounding air.

Some embodiments of the invention will now be described, by way of example, with reference to the accompanying drawings, in which:-
Figure 1 is a diagrammatic longitudinal section through the first embodiment of a system according to the present invention,
Figure 2 is a diagrammatic longitudinal section through the second embodiment;
Figure 3 is a diagrammatic longitudinal section through a third embodiment, and
Figure 4 is a diagrammatic longitudinal section through a fourth embodiment.

In each of the embodiments described similar parts are identified by the same reference numerals in each of the Figures.

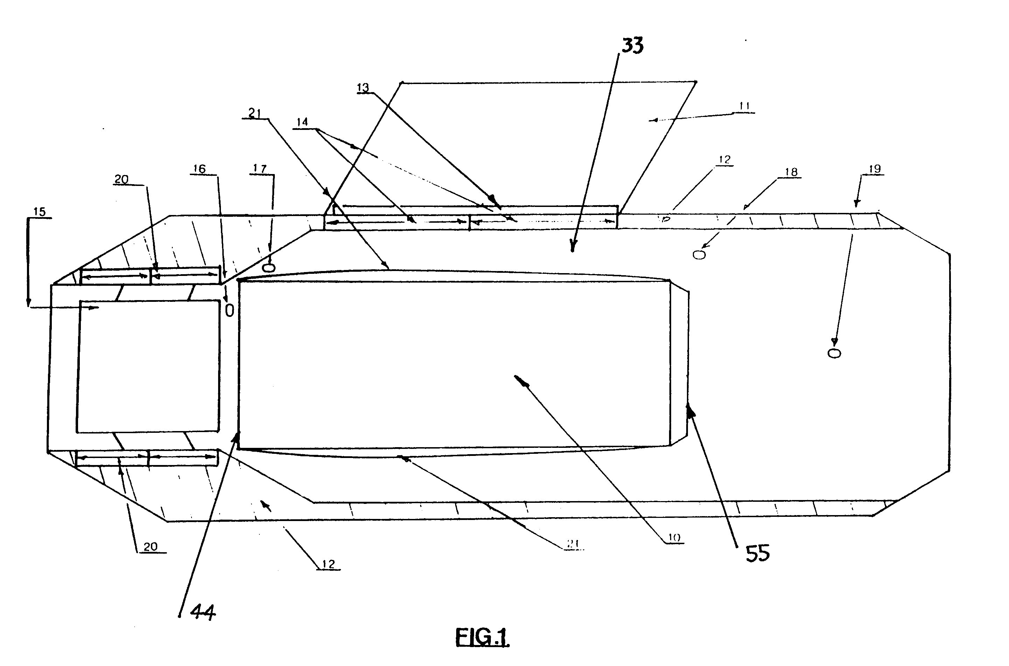

The propulsion system shown in Figure 1 comprises a jet engine 10 which may be a gas turbine jet propulsion engine with or without a by-pass system. The engine 10 is supported from the aircraft structure by a pylon 11. The engine is located within a duct 12 which surrounds the engine and which is mounted on a mounting rail 13 to allow axial movement relative to the engine 10. The duct 12 is moved by an actuating ram or rams 14.

Provided within the duct 12 ahead of the engine 10 is an annulus 15 which can be moved axially within the duct 12. An instrument 16 is provided for sensing the total air pressure at the inlet to the engine 10. A second instrument 17 is located at the inlet to the part of the duct 12 surrounding the engine to measure total air pressure of the air mass flow entering this part of the duct 12. A third instrument 18 is located in the duct 12 in close proximity to the final propelling nozzle of the engine to measure air velocity and a fourth instrument 19 is located downstream of the propelling nozzle of the engine 10 to measure jet stream velocity. The annulus 15 directs airflow to the engine 10 and has an inner diameter/area approximately 80% of that at the inlet to the engine 10. At high forward aircraft velocities the air mass induced into the secondary motion system formed by the duct 12 does not cause any starvation of the air mass required by the engine 10. The annulus 15 can be moved relative to the duct 12 by a ram or rams 20.

The engine 10 is provided with a shield 21 to insulate the engine 10 from the heat generated in the duct 12 and to smooth the air flow around the outside of the engine 10.

During take-off of the aircraft, the duct 12 will be moved forward relative to the engine 10 as the air mass flow increases and the air flowing through the duct 12 is expanded to do work on the aircraft *via* the duct 12.

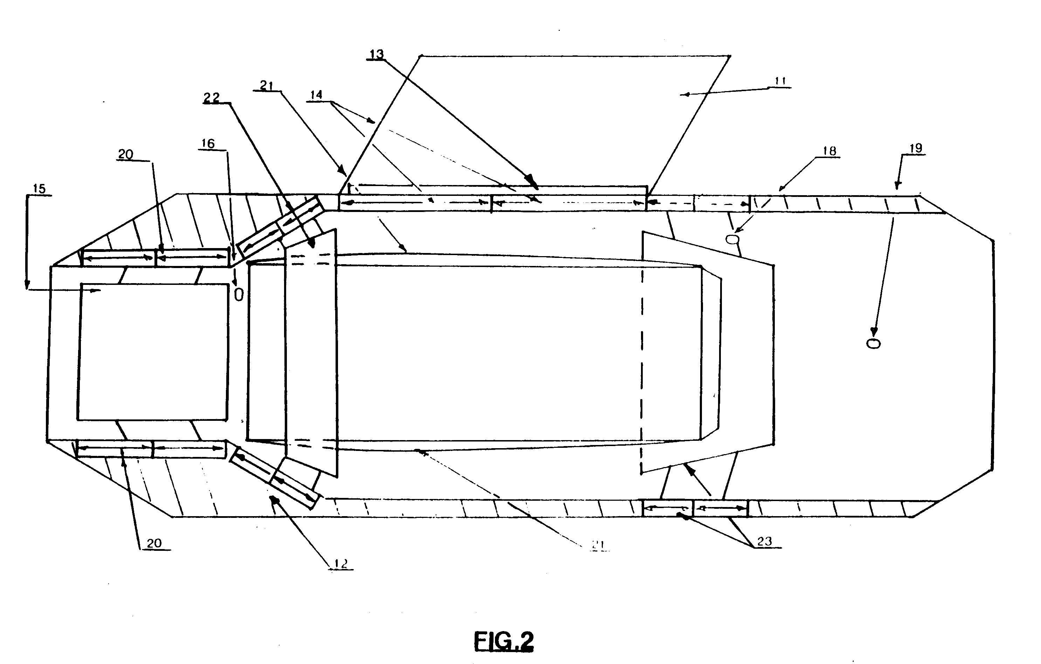

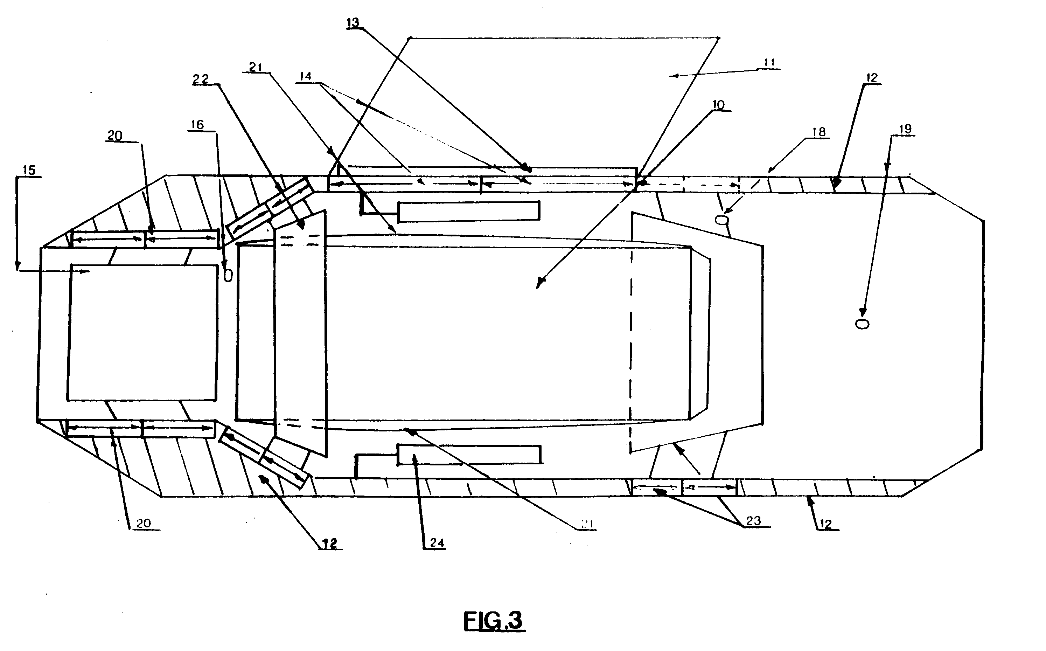

As shown in Figure 2, the duct 12 has a variable inner annulus 22 located between the inlet to the engine 10 and the inlet to the secondary system formed by the duct 12. A variable inner annulus 23 is located between the exit from the engine 10 and the outer main annulus formed by duct 12. This inner annulus 23 may be mounted on the engine 10 or on the duct 12. These variable annuli 22 and 23 are used to smooth the air flow when entering and leaving the secondary system. Annulus 23 is also used to provide means of mixing and balancing the velocities of the exit airstreams. In the embodiment of Figure 3, a combustion system 24 is provided in duct 12. The combustion system 24 is operated in parallel with that of engine 10.

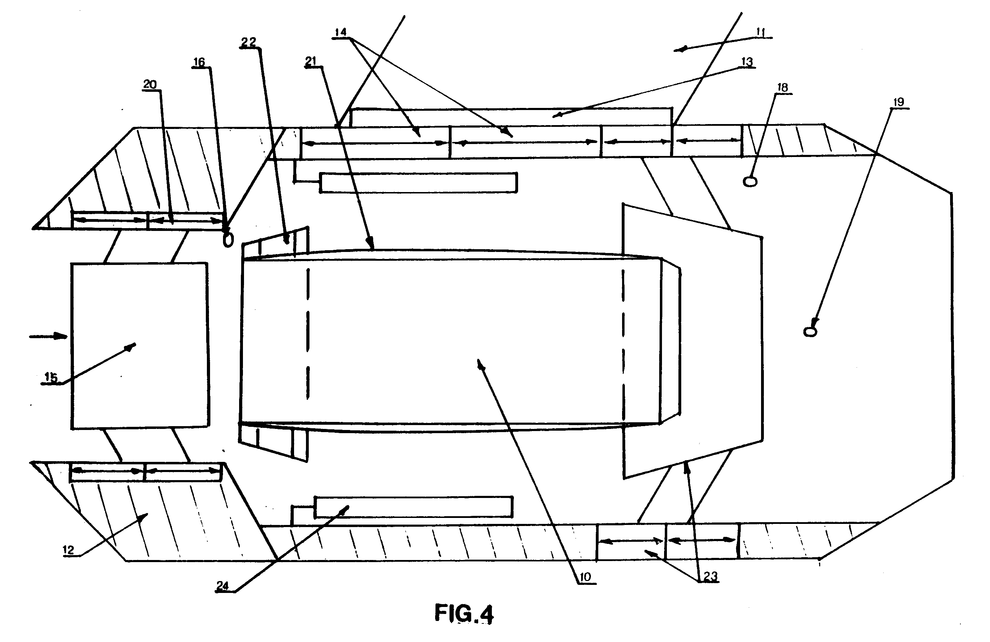

The embodiment of Figure 4 is similar to that of Figure 3 but in this embodiment the inlet area of the outer annulus formed by the duct 12 is greater than that of the engine inlet.

It is envisaged that the ratio of the secondary system inlet area to that of the jet engine 10 may be anything from 1:1 upwards. In the event that the secondary system's inlet ratio to that of the inlet to the jet engine 10 is greater than 1:1, then this annulus must have an inner annulus, with an inlet diameter at least equal to the inlet area of the jet engine 10 itself and must also be free to move axially relative to the outer annulus of duct 12.

It is envisaged that these area to area relationships will be set higher for supersonic and hypersonic velocities. For high cruise and long range performance a ratio as high as the existing fan jet engine by-pass ratios would probably prove to be desirable.

An inner annulus is located at the inlet to the secondary system having an inner diameter equal to that of the jet engine/core engine inlet.

In each application it is envisaged that the propelling nozzle of the outer secondary system will be approximately one third of the overall length of the jet engine 10 beyond the exit from the final propelling nozzle of the jet engine 10 itself. This distance must be sufficient to optimise the mixing between the respective airstreams from the annular duct and the jet engine before leaving the final propelling nozzle, i.e. before leaving the downstream end of the outer nozzle 12 of the combined fully integrated motion systems.

The total pressure sensing instruments 16 and 17 located at the inlets to the jet engine 10 and the secondary system of this invention, are required to have a reset pressure bias in favour of the inlet to the jet engine 10. It is envisaged that the control system will operate to maintain a positive total pressure balance in favour of the jet engine 10 for all aircraft velocities in order to avoid any starvation condition being created at its inlet. However, it is envisaged that this bias will be small.

Similarly, the control system is arranged to maintain a predetermined ratio between the secondary airstream exit velocity and that of the jet engine 10 or at least to maintain such ratio within a predetermined range. It is conceivable that this ratio may be required to be variable at different conditions and it is for this reason that the annulus 23 may be required to be variable.

This is necessary in order to be able to control the degree of volume mixing to take place between the respective airstreams in order to establish an optimum exit velocity for both airstreams before leaving the final propelling nozzle of the combined system. The angle which the annulus, in axial section, makes with respect to the axis of the system may be variable, for example by constructing the annulus as a series of circumferentially adjacent pivotally mounted flaps.

It is also envisaged that in the cold running conditions of duct 12 that the exit airstream energy from the jet engine 10 will be utilised by the judicious mixing of the airstreams from duct 12 and engine 10 by using the variable inner annulus 23 located between the exits from these respective systems thereby ensuring that the secondary exit air flow velocity is always greater than both its inlet velocity and that of the aircraft at any instant in flight.

In the hot running condition it is envisaged that both the velocity and pressure of the respective airstreams can be balanced before leaving the final propelling nozzle of the combined motion system. It is envisaged that it will be desirable in the hot running condition that the outer airstream should be kept at a higher relative pressure than the inner airstream from engine 10. In this way the higher velocity energy of the inner airstream can be used to accelerate the outer airstream thereby changing its positive pressure bias to matching velocity of the inner airstream. Here again it is very much a question of designer's choice, the options are many and varied.

In the cold running condition the aircraft after take-off will reach a state of choke at the inlet to the jet engine, the event, as soon as the total air pressure begins to rise, this will be sensed by the air pressure measuring devices located at the respective motion systems inlets. As soon as the total pressure begins to exceed the desired pressure ratio for that condition of flight, an electrical signal is passed to an electronic control system, which actuates ram control system to move the outer annulus 12 forward relative to the engine 10 thereby allowing the main inlet airstream to spill into the secondary system causing the reversal of the tendency for the total inlet pressure to rise. The opening between the inlet to the secondary system and the inlet to the jet engine 10 will be maintained so that the pre-programmed total air pressure acceptable at that condition is maintained. In parallel with this operation, the inner annuli 22 and 23 respectively, will be caused to smooth the flow of air through the secondary system such that the downstream exit velocity is at all times greater than the inlet velocity to the duct system and higher than the relative aircraft velocity at any instant. In this instance the higher downstream velocity of the hot airstream leaving the jet engine 10 will be used to induce the required increase in the exit velocity of the secondary system prior to being required to be mixed with the engine jet stream thereby maintaining the required positive velocity balance across the secondary system. The inner annulus 23 is located so that the exit from the second system will also be caused to create the degree of airstream mixing necessary to induce the required velocity balance across the second system. This velocity balance across the secondary system will at all times be greater than the aircraft velocity at any instant. The system will be particularly advantageous in the descent phase.

The required positive velocity balance across the secondary duct propulsion system will be maintained regardless of whether the aircraft is accelerating or decelerating. The only condition necessary to activate the secondary propulsion duct system is the total inlet pressure ratio limit set at the inlet to the jet engine 10 for all inlet air velocity conditions as determined by the respective engine and aircraft designers of any particular aircraft.

The operation for the hot condition (Figures 3 and 4) is as for the cold condition except that the introduction of heat into the secondary system will involve a reprogramming of the parameters of velocity and pressure acting across the secondary system. Essentially, this will involve no more than a redefining of the relative angle changes to the inner annulus 23 located at the exist to the secondary system to optimise the velocity balance between both airstreams before reaching the final variable propelling nozzle. The introduction of heat energy into the secondary system can usefully be brought about as soon as the control choke state is exceeded at the engine inlet.

It is envisaged that the initial acceleration towards take off velocity will be initiated in the normal way using the power of the jet engine 10 but the secondary combustion system 24 can be usefully activated at any convenient time or condition.

The secondary combustion system 24 will be particularly useful at supersonic and hypersonic speeds.

To compensate for the loss of power during take-off at high ISA conditions and or at altitudes above 1000ft, the bias at the inlets to the respective systems should require the inlet gap between them to be relatively increased in order to optimise the conversion of the higher airstream temperature to velocity energy.

The secondary system is not mechanical and therefore, is less affected by outside ISA temperatures and in fact does not incur as great a propulsive thrust penalty because of it. Consequently, the payload penalty incurred because of high ISA temperature conditions prevailing at the point of take off can be reduced.

At high aircraft speeds, above supersonic speed, it would be more beneficial to switch the primary roles of both systems, the secondary system being used to produce the primary power and the engine taking on the role of secondary back up or, complementary propulsion system. In this way, the limitations imposed upon the thermal efficiency of the aircraft as a motion vehicle by the physical limitations of the systems comprising its jet engine/engines, in the primary mode, is appreciably reduced.

At speeds above Mach 2 the acceleration response capability of the aircraft using the secondary system as the primary source of power makes possible a tremendous improvement in its acceleration capability.

The onset of the decrease in overall thrust with altitude can be appreciably delayed because it can be compensated for by increasing the airflow through the duct 12.

The hot running condition of the secondary system can usefully be initiated at any time. The velocity control in the hot condition is exercised in exactly the same way as for the cold running condition except that the final exit temperature of the airstream leaving the secondary system should not be allowed to exceed that of the jet engine when it is in use as the primary source of thrust because this would cause serious air flow disturbance and therefore thrust/velocity loss to the combined system and therefore to the aircraft. Here again, a pre-programmed exit temperature relationship between both exit airstreams can be chosen by the designers to cover the entire flight envelope of any particular aircraft application.

It is envisaged that the final propelling nozzle of the combined system would also be variable, making possible a final influence upon the relative airstream velocities before leafing the aircraft's propulsive system.

It is further envisaged that the whole operation whether in cold running condition, with or without the combustion option, can readily be controlled using a simple analogue/digital computerised control device. Although the secondary combustion system at velocities/speeds of less than Mach 2 will be relatively low pressure nonetheless, efficient combustion cab still be obtained because of the longer time cycle/space in which the conversion of the fuel to heat can take place.

The operation and control in this mode is exactly the same as for the cold and hot conditions Figures 1, inclusive of Figures 2 and 3 respectively. The only difference being the additional control requirement to move duct 15 relative to the outer annulus. Duct 15 as explained, shall be required to function as the inlet to the outer annulus did in the application where the inlet areas to both systems are the same, as in Figure No. 1. In this instance some form of ram arrangement, located within the Nacelle forming the inlet to the outer annulus/Nacelle connected to duct 15 the inner annulus located at the entrance to the jet engine, in such a way, that it is caused to move axially relatively to both the outer annulus/Nacelle itself and the inlet to the jet engine.

From an economic commercial operation point of view, it would be desirable to keep the overall velocity differences between the combined system relative to the resultant aircraft velocity as low as possible. This condition would in turn make possible the attainment of very high aircraft propulsion/motion system efficiencies. This condition would also require that the air mass flow velocity passing through the secondary system be as close as possible to the resultant aircraft velocity. In such an application it is envisaged that a by pass ratio as high as that used in existing fan jet engines could be accommodated to advantage.

For fighter or any military applications where a high acceleration with high through air velocity performance is critical, then the by pass ratio could be somewhat less, probably somewhere between 2 and 4 to 1, the lower figure for the fighter application and the latter for the bomber or long range surveillance aircraft.

## Claims

1. An aircraft comprising an airframe structure, at least one jet engine (10) having a longitudinal axis, said jet engine having a surrounding engine casing (21) defining at opposite ends of said casing an inlet opening and an exhaust outlet centred on said engine axis, a further hollow casing (12) enclosing said engine casing coaxial with the engine (10) and spaced from the engine casing to define therewith an annular-section duct, said further casing (12) having an inlet opening centred on said axis and disposed upstream of said inlet opening of the engine casing (21), an outlet opening centred on said axis and disposed downstream of said exhaust outlet of said engine casing, said further hollow casing (12) having a first internal diameter at a first position upstream of said engine casing, a second internal diameter at a position downstream of the inlet opening of said engine casing and a region between said first and second positions over which the internal diameter increases from said first position to the second position, an annular inlet opening to said annular-section duct, said annular inlet opening being defined by the leading end of said engine casing and said region of the outer casing between said first and second positions, characterised by the absence of any duct or other opening for air or combustion gas flow through said engine casing (21) between the interior of said jet engine and said annular section duct (33), in the region between said inlet opening (44) and said exhaust outlet (55) of the engine (10) and further characterised by at least one engine support member (11) extending from said engine to said airframe structure to support the engine, means (13) mounting said further casing (12) for longitudinal movement relative to said jet engine and said engine casing and said engine support member (11), and first actuator means (14) for effecting such longitudinal movement whereby said annular inlet opening to said annular-section duct can be varied in size whereby, in use, the quantity of air by-passing the jet engine *via* said annular-section duct can be varied.

2. An aircraft according to claim 1 characterised by the lack of any means for injecting fuel into said annular duct or the region within said further casing downstream of the jet engine.

3. An aircraft according to claim 1, including a hollow annular cross-section member (15) disposed in the upstream part of the interior of said further casing, upstream of said engine casing and co-axial with the engine - said annular cross-section member being spaced from the inner wall of said further casing (12) to define a second annular-section duct therewith and defining an axial through passage internally of said hollow annular cross section member, support means for said hollow annular cross-section member, including support members extending from said hollow annular cross-section member across the second annular duct to said further housing and actuator means (20) connecting said support members with said further housing and operable to displace said members, and hence said hollow annular cross-section member (15), longitudinally relative to the outer housing and the inner housing, along the engine axis.

4. An aircraft as claimed in claim 3, wherein the inlet to said further casing (12) has a frontal area greater than that of said inlet to said engine casing (21) and said axial through passage of said annular cross-section member (15) has a cross-sectional area which is substantially equal to that of said inlet to said engine casing (21).

5. An aircraft according to any preceding claim and further including means (16, 17) for sensing the air pressure at points respectively upstream of the inlet to said engine casing (21) and downstream of the inlet end of said engine casing but in the entrance portion of said annular-section duct, computer means receiving signals from said pressure sensing means (16, 17) and arranged to control said first actuating means (14) in accordance with said signals.

6. An aircraft according to any preceding claim and further including means (18, 19) for sensing gas velocity at the exit end of said first annular-section duct and at the outlet of said jet engine and computer means receiving signals from said pressure sensing means and arranged to control said first actuating means in accordance with said signals.

7. An aircraft as claimed in any preceding claim, including flow-controlling annuli (22, 23), one of which (22) is located in said annular duct in close proximity to the inlet to said duct, and the other (23) located at the exit from said annular duct, said flow controlling annuli (22, 23) being adjustable in longitudinal position relative to said engine and said further casing, further actuating means (23) being provided for adjusting the position of said flow-controlling annuli.

8. An aircraft as claimed in any preceding claim wherein said engine casing serves to smooth the air flow passing around the jet engine and through said annular-section duct and also serves as a heat shield.

## Patentansprüche

1. Flugzeug mit einer Flugwerkstruktur, mindestens einem Düsentriebwerk (10) mit einer Längsachse, wobei genanntes Düsentriebwerk ein umgebendes Triebwerkgehäuse (21) hat, das an gegenüberliegenden Enden von genanntem Gehäuse eine auf genannter Triebwerkachse zentrierte Eintrittsöffnung und eine Austrittsöffnung bestimmt, sowie ein weiteres hohles Gehäuse (12), welches genanntes Triebwerkgehäuse koaxial mit dem Triebwerk (10) umschließt und vom Triebwerkgehäuse mit Zwischenraum angeordnet ist, um damit einen Kanal von ringförmigem Querschnitt zu bestimmen, wobei genanntes weiteres Gehäuse (12) eine auf genannter Achse zentrierte und oberhalb von genannter Eintrittsöffnung des Triebwerkgehäuses (21) angeordnete Eintrittsöffnung sowie eine auf genannter Achse zentrierte und unterhalb von genannter Austrittsöffnung von genanntem Triebwerkgehäuse angeordnete Austrittsöffnung aufweist, wobei das genannte weitere hohle Gehäuse (12) einen ersten Innendurchmesser an einer ersten Position oberhalb von genanntem Triebwerkgehäuse, einen zweiten Innendurchmesser an einer Position unterhalb der Eintrittsöffnung von genanntem Triebwerkgehäuse und einen Bereich zwischen genannten ersten und zweiten Positionen hat, über denen der Innendurchmesser von genannter erster Position zu der zweiten Position zunimmt, eine ringförmige Eintrittsöffnung zu genanntem Kanal von ringförmigem Querschnitt, wobei genannte ringförmige Eintrittsöffnung durch das vordere Ende von genanntem Triebwerkgehäuse und genannten Bereich des äußeren Gehäuses zwischen genannten ersten und zweiten Positionen bestimmt ist, gekennzeichnet durch die Abwesenheit irgendeines Kanals oder einer anderen Öffnung zum Strömen von Luft oder Verbrennungsgas durch genanntes Triebwerkgehäuse (21) zwischen dem Inneren von genanntem Düsentriebwerk und genanntem Kanal von ringförmigem Querschnitt (33), in dem Bereich zwischen genannter Eintrittsöffnung (44) und genannter Austrittsöffnung (55) des Triebwerks (10) und darüber hinaus gekennzeichnet durch mindestens ein Triebwerktragglied (11), das zum Tragen des Triebwerks von genanntem Triebwerk zu genannter Flugwerkstruktur verläuft, Mittel (13) zum Lagern von genanntem weiterem Gehäuse (12) zur Längsbewegung relativ zu genanntem Düsentriebwerk und genanntem Triebwerkgehäuse und genanntem Triebwerktragglied (11) und erstes Stellmittel (14) zur Bewirkung genannter Längsbewegung, wodurch genannte ringförmige Eintrittsöffnung zu genanntem Kanal von ringförmigem Querschnitt in ihrer Größe veränderbar ist, wodurch im Betrieb die Luftmenge, die am Düsentriebwerk durch genannten Kanal von ringförmigem Querschnitt herumgeführt wird, veränderbar ist.

2. Flugzeug nach Anspruch 1, gekennzeichnet durch die Abwesenheit von jeglichem Mittel zum Einspritzen von Kraftstoff in genannten ringförmigen Kanal oder den Bereich in genanntem weiterem Gehäuse unterhalb des Düsentriebwerks.

3. Flugzeug nach Anspruch 1, das ein hohles Glied von ringförmigem Querschnitt (15) einschließt, das in dem oberen Teil des Inneren von genanntem weiterem Gehäuse, oberhalb von genanntem Triebwerkgehäuse und koaxial mit dem Triebwerk angeordnet ist, wobei genanntes Glied von ringförmigem Querschnitt mit Zwischenraum von der Innenwand von genanntem weiterem Gehäuse (12) angeordnet ist, um einen zweiten Kanal von ringförmigem Querschnitt damit zu bestimmen und einen axialen Durchgang im Inneren von genanntem hohlem Glied von ringförmigem Querschnitt bestimmt, mit Stützmittel für genanntes hohles Glied von ringförmigem Querschnitt, das Tragglieder einschließt, die von genanntem hohlem Glied mit ringförmigem Querschnitt, über den zweiten ringförmigen Kanal zu genanntem weiterem Gehäuse verlaufen, und mit Stellmittel (20), die genannte Tragglieder mit genanntem weiterem Gehäuse verbinden und betreibbar sind, um genannte Glieder und folglich genanntes hohles Glied von ringförmigem Querschnitt (15) längsweise relativ zum äußeren Gehäuse und dem inneren Gehäuse entlang der Triebwerkachse zu verschieben.

4. Flugzeug nach Anspruch 3, worin der Eintritt zu genanntem weiterem Gehäuse (12) eine Stirnfläche hat, die größer als die von genanntem Eintritt zu genanntem Triebwerkgehäuse (21) ist und genannter axialer Durchgang von genanntem Glied von ringförmigem Querschnitt (15) eine Querschnittsfläche hat, die im wesentlichen gleich der von genanntem Eintritt zu genanntem Triebwerkgehäuse (21) ist.

5. Flugzeug nach einem der vorangehenden Ansprüche, mit darüber hinaus Mittel (16, 17) zum Abtasten des Luftdrucks an Stellen oberhalb des Eintritts zu genanntem Triebwerkgehäuse (21) bzw. unterhalb des Eintrittsendes von genanntem Triebwerkgehäuse, aber in dem Eingangsabschnitt von genanntem Kanal von ringförmigem Querschnitt, Computermittel zum Empfangen von Signalen aus genannten Druckabtastmitteln (16, 17) und zum Regeln von genanntem erstem Stellmittel (14) im Einklang mit genannten Signalen angeordnet ist.

6. Flugzeug nach einem der vorangehenden Ansprüche, mit darüber hinaus Mittel (18, 19) zum Abtasten der Gasgeschwindigkeit am Ausgangsande von genanntem erstem Kanal von ringförmigem Querschnitt und am Austritt von genanntem Düsentriebwerk und Computermittel zum Empfang von Signalen aus genanntem Druckabtastmittel und zum Regeln von genanntem erstem Stellmittel in Einklang mit genannten Signalen angeordnet ist.

7. Flugzeug nach einem der vorangehenden Ansprüche, mit die Strömung regelnden Ringen (22, 23), wobei einer von ihnen (22) in genanntem ringförmigem Kanal ganz in der Nähe zum Eintritt zu genanntem Kanal und der andere (23) am Ausgang von genanntem ringförmigem Kanal gelegen ist, wobei die die Strömung regelnden Ringe (22, 23) in Längsposition relativ zu genanntem Triebwerk und genanntem weiterem Gehäuse verstellbar sind, wobei ein weiteres Stellmittel (23) zum Verstellen der Position Von genannten die Strömung regelnden Ringen vorgesehen ist.

8. Flugzeug nach einem der vorangehenden Ansprüche, worin genanntes Triebwerkgehäuse zum Glätten des Luftstromes dient, der um das Düsentriebwerk herum und durch genannten Kanal von ringförmigem Querschnitt herumgeführt wird und auch als eine Wärmeabschirmung dient.

## Revendications

1. Aéronef comprenant une cellule d'aéronef, au moins un moteur à réaction (10) ayant un axe longitudinal, ledit moteur ayant un capot moteur (21) qui l'entoure, délimitant aux extrémités opposées dudit capot un orifice d'admission et un orifice d'échappement centrés sur ledit axe de moteur, un autre capot creux (12) renfermant ledit capot moteur coaxial avec le moteur (10) et éloigné du capot moteur pour délimiter avec lui un canal à section transversale annulaire, ledit autre capot (12) ayant un orifice d'admission centré sur ledit axe et placé en mont dudit orifice d'admission du capot moteur (21), un orifice d'échappement centré sur ledit axe et placé en aval dudit orifice d'échappement dudit capot moteur, ledit autre capot creux (12) ayant un premier diamètre intérieur en une première position en amont dudit capot moteur, un deuxième diamètre intérieur en une position en aval de l'orifice d'admission dudit capot moteur, et une zone entre lesdites première et deuxième positions sur laquelle le diamètre intérieur augmente de ladite première position vers la deuxième position, un orifice d'admission annulaire audit canal à section transversale annulaire, ledit orifice d'admission annulaire étant délimité par l'extrémité d'attaque dudit capot moteur et ladite zone du capot extérieur entre lesdites première et deuxième positions, caractérisé par l'absence de tout canal ou autre orifice pour l'écoulement de l'air ou de gaz de combustion au travers dudit capot moteur (21) entre l'intérieur dudit moteur à réaction et dudit canal à section annulaire (33) dans la zone entre ledit orifice d'admission (44) et ledit orifice d'échappement (55) du moteur (10), et caractérisé en outre par au moins un élément de support (11) de moteur, s'étendant dudit moteur vers ladite cellule d'aéronef pour supporter le moteur, un moyen (13) supportant ledit autre capot (12) pour un mouvement longitudinal par rapport audit moteur à réaction et audit capot moteur et audit élément de support (11) du moteur, et un premier moyen d'actionnement (14) pour effectuer ce mouvement longitudinal, en suite de quoi ledit orifice d'admission audit canal à section annulaire pourra être modifié quant à sa grandeur, de sorte que, à l'emploi, la quantité d'air s'écoulant en dérivation du moteur à réaction par la voie dudit canal à section transversale annulaire pourra être modifiée.

2. Aéronef selon la revendication 1, caractérisé par l'absence de tout moyen d'injection de carburant dans ledit canal annulaire ou la zone à l'intérieur dudit autre capot en aval du moteur à réaction.

3. Aéronef selon la revendication 1, comprenant un élément (15) creux à section transversale annulaire situé dans la partie amont de l'intérieur dudit autre capot, en amont dudit capot moteur et coaxial avec le moteur, ledit élément creux à section transversale annulaire étant éloigné de la paroi intérieure dudit autre capot (12) pour délimiter par ce moyen un deuxième canal à section transversale annulaire, et délimitant un passage traversant axial à l'intérieur dudit élément creux à section transversale annulaire, des moyens de support pour ledit élément creux à section transversale annulaire, comprenant dos éléments de support s'étendant dudit élément creux à section transversale annulaire en travers du deuxième canal annulaire vers ledit autre capot, et un moyen d'actionnement (20) reliant lesdits éléments de support avec ledit autre capot et pouvant être manoeuvré pour déplacer lesdits éléments, et en conséquence ledit élément (15) à section transversale annulaire longitudinalement par rapport au capot extérieur et au capot intérieur, le long de l'axe du moteur.

4. Aéronef selon la revendication 3, caractérisé en ce que l'admission audit autre capot (12) a une surface frontale plus grande que celle dudit orifice d'admission audit capot moteur (21), et ledit passage traversant axial dudit élément (15) creux à section transversale annulaire a une surface transversale qui est en grande mesure égale à celle de ladite admission audit capot moteur (21).

5. Aéronef selon l'une quelconque des revendications précédentes et comprenant en outre des moyens (16, 17) de détection de la pression de l'air en des points respectivement en amont de l'admission audit capot moteur (21), et en aval de l'extrémité d'admission dudit capot moteur, mais dans la partie d'entrée dudit canal à section annulaire, des moyens automatisés recevant des signaux desdits moyens (16, 17) de détection de pression et conçus pour commander ledit premier moyen d'actionnement (14) conformément auxdits signaux.

6. Aéronef selon l'une quelconque des revendications précédentes, comprenant des moyens (18, 19) de détection de la vitesse des gaz à l'extrémité de sortie dudit premier canal à section annulaire, et à l'échappement dudit moteur à réaction, et des moyens automatisés recevant des signaux desdits moyens de détection de pression et conçue pour commander ledit premier moyen d'actionnement conformément auxdits signaux.

7. Aéronef selon l'une quelconque des revendications précédentes, comprenant des couronnes de commande de débit (22, 23), dont l'une (22) est située dans ledit canal annulaire dans la proximité immédiate de l'admission audit canal, et l'autre (23) est située à la sortie dudit canal annulaire, lesdites couronnes de commande de débit (22, 23) état réglables quant à leur position longitudinale par rapport audit moteur et audit autre capot, des moyens d'actionnement (23) complémentaires étant prévus pour régler la position desdites couronnes de commande de débit.

8. Aéronef selon l'une quelconque des revendications précédentes, caractérisé en ce que ledit capot moteur sert à égaliser le débit d'air passant autour du moteur à réaction et par ledit canal à section transversale annulaire, et sert aussi de bouclier thermique.
